# EUROPEAN PATENT SPECIFICATION

(11) **EP 2 607 223 B1**
(45) Date of publication and mention of the grant of the patent: **01.06.2016**
(21) Application number: 10858858.3
(22) Date of filing: 07.12.2010
(51) Int. Cl.: B62M 23/02, B62M 6/50, G01L 5/04

(54) **TORQUE AND SPEED SENSOR FOR ELECTRIC BICYCLE**
DREHMOMENT- UND GESCHWINDIGKEITSSENSOR FÜR ELEKTROFAHRRÄDER
CAPTEUR DE COUPLE ET DE VITESSE POUR BICYCLETTE ÉLECTRIQUE

(30) Priority: 28.10.2010 CN 201010522236
(43) Date of publication of application: 26.06.2013
(73) Proprietor: Suzhou Industrial Park Tongsheng Bicycle Co. Ltd., Suzhou, Jiangsu 215124 (CN)
(72) Inventor: MA, Qingyi, Suzhou Jiangsu 215124 (CN)
(74) Representative: Gulde & Partner
(86) International application number: PCT/CN2010/079536
(87) International publication number: WO 2012/055129

(56) References cited:
- EP-A1- 0 612 654
- EP-A2- 0 891 923
- WO-A1-2010/091323
- CN-A- 101 973 357
- CN-U- 201 501 504
- CN-Y- 2 339 990

## Description

### FIELD OF TECHNOLOGY

The present invention relates to an electric-bike torque sensor.

### BACKGROUND TECHNOLOGIES

An electric bike, because of its characteristics such as being light and quick, effortless, and free of pollution, is increasingly used in our country. The traditional electric bike adjusts the speed with a handle, i.e. controlling the output power of the motor with the handle; and currently more and more electric bikes mainly use a torque sensor to convert the foot pedal force into a corresponding voltage signal output, which controls the output power of the motor after being enlarged, thus consumedly saving energy. However, the existing torque sensor has the problems that the signal output is nonlinearly continuous, easy to be off, and hysteretic, the work stability and sensitivity are poor, the structure of the mechanical portion is complicated, and the lead wire is easy to be wound to the central shaft of the bike.

Document EP0612654 shows the preamble of claim 1.

### CONTENTS OF INVENTION

A purpose of the present invention is to provide an electric-bike torque sensor with better work stability and sensitivity.

A technical solution of the present invention is as follows: An electric-bike torque sensor is provided, comprising a central shaft, a chain wheel, and a crank fixed on the central shaft, characterized in that: the electric-bike torque sensor further comprises a deformed frame including an outer ring and an inner ring connected with each other through a number of radial connecting bars, the inner ring being secured to the crank, the outer ring being secured to the chain wheel; two torque-sensing steel magnets, their outer surfaces having the opposite polarity, are fixed on the inner ring, while a signal output board, on which is installed a linear Hall element, is fixed on the outer ring, the sensing face of the linear Hall element being opposite to the outer surface of the two steel magnets; the electric-bike torque sensor further includes a rotating part, on which is fixed a secondary winding, and a stationary part assembled coaxially on the central shaft, the rotating part being fixed relative to one of the chain wheel, the deformed frame, the crank and the central shaft; the stationary part, on which are fixed the primary winding and the signal receiving board, is kept from rotating relative to the rotating part; the primary and secondary windings together form an isolation transformer, the primary winding being electrically connected with an alternating-current generator arranged on the signal receiving board provided with a lead wire, the secondary winding being electrically connected with the signal output board.

Moreover, the secondary winding of the present invention is composed of a circular rotating magnetic tank fixed on the rotating part and a rotating coil arranged inside the rotating magnetic tank, and the primary winding is composed of a circular stationary magnetic tank fixed on the stationary part and a stationary coil arranged inside the stationary magnetic tank; the rotating magnetic tank and the stationary magnetic tank together form a closed loop, and form the isolation transformer together with the rotating coil and the stationary coil located inside; the stationary coil, equivalent to the primary coil of the isolation transformer, is electrically connected with the alternating-current generator arranged on the signal receiving board, while the rotating coil, equivalent to the secondary coil of the isolation transformer, is electrically connected with the signal output board.

Furthermore, on the central shaft of the present invention is fixed a central-shaft bowl rotatively arranged on a central-connector swivel connected with the electric-bike frame, the central-connector swivel being provided with a stop sheet with a groove, the stationary part being provided with a stop rod protruding into against the groove.

Furthermore, the rotating part of the present invention is provided with some speed-sensing steel magnets having a circular distribution, and the signal receiving board with a switching Hall element, the switch Hall element having its sensing face opposite to the surface of the speed-sensing steel magnet.

Furthermore, a protective cover is further fixed on the crank of the present invention for covering the deformed frame.

Furthermore, the stationary part and rotating part of the present invention are fixed axially through a buckle.

The working principle of the present invention is as follows:
When a person is riding the bike, the crank will drive the chain wheel to rotate through the deformed frame. To be the same with the customary technology, the chain wheel has to be provided with a chain to drive the bike, and the chain will achieve balance by exerting a reaction torque on the distortion frame through the chain wheel. Because the chain wheel and crank are secured to the outer and inner rings of the deformed frame, respectively, two opposite torques are exerted on the outer and inner rings of the deformed frame, respectively, making the outer and inner rings of the deformed frame deformed and dislocated because of the torques, then making the position of the linear Hall element change relative to that of the two torque-sensing steel magnets. Because the two torque-sensing steel magnets produce a near linear magnetic field distribution from the N pole to S pole in a small area on the sensing face of the linear Hall element, the output voltage of the linear Hall element is affected by the change of the magnetic field through which the sensing face of the linear Hall element passes after the change of the position of the linear Hall element relative to that of the two torque-sensing steel magnets. The signal output board has the function of converting the output voltage of the linear Hall element into a corresponding variable load through the electronic circuit thereon.

When the rotating part and stationary part of the present invention are coaxially assembled on the central shaft, the rotating magnetic tank and stationary magnetic tank together form a closed loop, and form the isolation transformer together with the rotating coil and stationary coil located inside; the stationary coil, equivalent to the primary coil of the isolation transformer, is electrically connected with the alternating-current generator arranged on the signal receiving board, and the rotating coil, equivalent to the secondary coil of the isolation transformer, is electrically connected with the signal output board. The alternating-current generator installed on the signal receiving board supplies power to the stationary coil, i.e. supplying the alternating current to the primary coil of the isolation transformer; because the secondary coil (i.e. the rotating coil) of the isolation transformer is connected with the variable load, the current at the primary side may change with the variable load at the secondary side, thus completing detection of the torque by converting the change of the current into the voltage output through the signal receiving board.

In the specific operation of the present invention, because the rotating part rotates with the chain wheel and deformed frame while the stationary part does not rotate due to the action of the stop rod and stop sheet, the lead wire on the signal receiving board fixed relative to the stationary part can keep still, and will not be wound to the central shaft to cause a loss like the usual case in the existing technology which results in decreased signal output stability.

Meanwhile, the present invention can also detect the speed. When the electric bike is in operation, the rotating part rotates with the chain wheel, while the switching Hall element is stationary; thus, some speed-sensing steel magnets having a circular distribution pass by the sensing face of the switching Hall element continuously, making the switching Hall element sense and output a corresponding speed pulse voltage signal that is finally outputted through the lead wire after the corresponding signal processing by the signal receiving board.

The present invention has the following advantages:
1. The electric-bike torque sensor provided by the present invention measures the torque exerted on the crank by the foot pedal force with the help of the specially designed deformed frame as well as the torque-sensing steel magnet and linear Hall element arranged thereon, not only ingenious but also highly sensitive; besides, the present invention further specially designs an isolation transformer with the primary and secondary windings respectively arranged on the stationary and rotating parts for outputting the measured Hall voltage signal, making the signal transmission stability better, consumedly improving the overall work performance and measurement accuracy of the present invention.
2. When the electric-bike torque sensor provided by the present invention is in specific operation, the rotating part rotates with the chain wheel and deformed frame, while the stationary part does not rotate due to the action of the stop rod and stop sheet, thus making the lead wire on the signal receiving board fixed relative to the stationary part keep still and not wound to the central shaft to cause a loss like the usual case in the existing technology which results in decreased signal output stability.

### STATEMENT OF APPENDED DRAWINGS

The present invention will further be described below with reference to the drawings and examples.

Figure 1 is a stereoscopic schematic view of the structure of the present invention; and

Figure 2 is a stereoscopic schematic rear view of the structure in Figure 1.

List of reference numbers: 1. Central shaft; 2. chain wheel; 3. crank; 4. deformed frame; 4a. outer ring; 4b. inner ring; 4c. connecting bar; 5. signal output board; 6. linear Hall element; 7. rotating part; 8. stationary part; 9. signal receiving board; 10. lead wire; 11. rotating magnetic tank; 12. rotating coil; 13. stationary magnetic tank; 14. stationary coil; 15. central-shaft bowl; 16. central-connector swivel; 17. stop sheet; 18. stop rod; 19. switching Hall element; 20. protective cover; A. torque-sensing steel magnet; and B. speed-sensing steel magnet.

### SPECIFIC METHOD OF USE

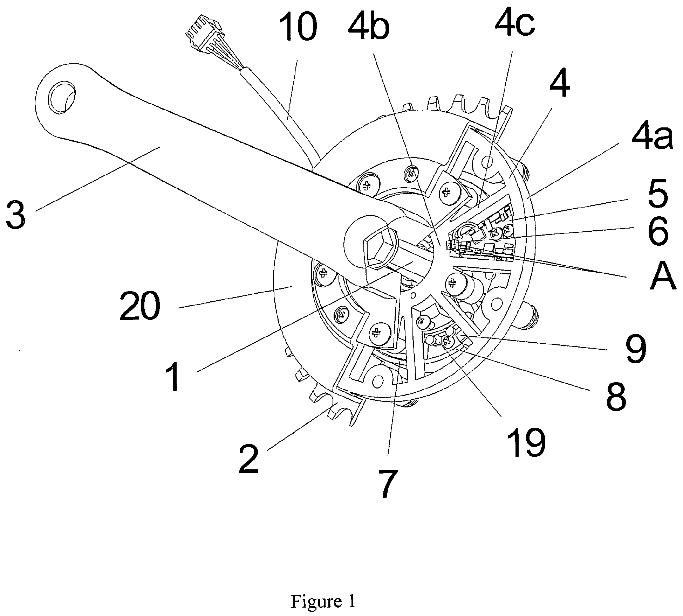

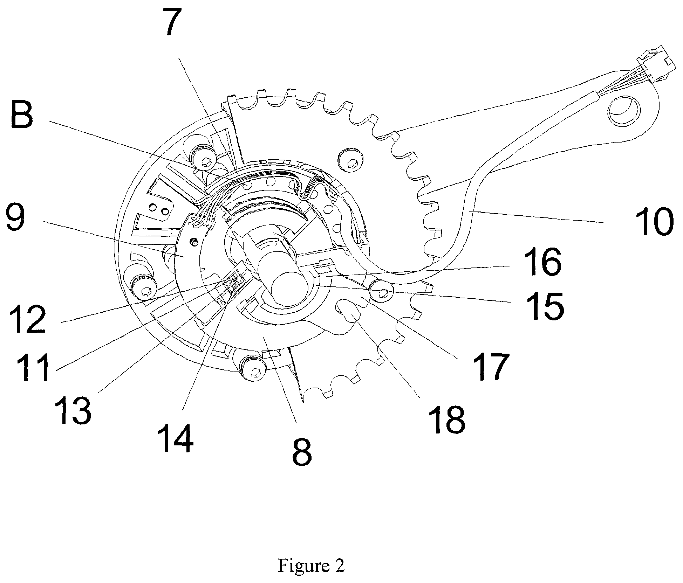

Example: As shown in Figures 1 and 2, the electric-bike torque sensor provided in this example is composed of the central shaft 1, the chain wheel 2, the crank 3 fixed on the central shaft 1, the deformed frame 4, the signal output board 5, the linear Hall element 6, the rotating part 7, the stationary part 8, the signal receiving board 9, the lead wire 10, the rotating magnetic tank 11, the rotating coil 12, the stationary magnetic tank 13, the stationary coil 14, the central-shaft bowl 15, the central-connector swivel 16, the stop sheet 17, the stop rod 18, the switching Hall element 19, and the protective cover 20.

The deformed frame 4 in the example is composed of the outer ring 4a, the inner ring 4b as well as ten radial connecting bars connected in between (Figure 1 only shows half of the deformed frame 4), the inner ring 4b being secured to the crank 3 and the outer ring 4a to the chain wheel 2 through a screw; the two torque-sensing steel magnets A, their outer surfaces having the opposite polarity, are fixed on the inner ring 4b, and the signal output board 5, on which is installed the linear Hall element 6, is fixed on the outer ring 4a, the sensing face of the linear Hall element 6 being opposite to the outer surface of the two steel magnets A.

The rotating part 7 and the stationary part 8 in the example are coaxially assembled on the central shaft, and the rotating part 7 is provided with four buckles (not shown in the drawing) for buckling the stationary part 8, thus making the rotating part 7 and the stationary part 8 fixed axially. The rotating part 7 is fixed relative to the deformed frame 4 through a screw, and thus it can rotate with the central shaft 1, the chain wheel 2, the crank 3 and the deformed frame 4; besides, on the central shaft 1 in the example is fixed the central-shaft bowl 15 rotatively arranged on the central-connector swivel 16 connected with the electric-bike frame, the central-connector swivel 16 being provided with the stop sheet 17 with a groove, the stationary part 8 being provided with the stop rod 18 protruding into against the groove, the stationary part 8 being kept still relative to the rotating part 7 with the help of the stop rod 18 in cooperation with the stop sheet 17.

In the example, the secondary winding, fixed on the rotating part 7, is composed of the circular rotating magnetic tank 11 fixed on the rotating part 7 and the rotating coil 12 arranged inside the rotating magnetic tank 11; the primary winding and the signal receiving board 9 are fixed on the stationary part 8, the primary winding being composed of the circular stationary magnetic tank 13 fixed on the stationary part 8 and the stationary coil 14 arranged inside the stationary magnetic tank 13; the rotating magnetic tank 11 and the stationary magnetic tank 13 together form a closed loop, and form the isolation transformer together with the rotating coil 11 and the stationary coil 14 located inside; the stationary coil 14, equivalent to the primary coil of the isolation transformer, is electrically connected with the alternating-current generator arranged on the signal receiving board 9, and the rotating coil 12, equivalent to the secondary coil of the isolation transformer, is electrically connected with the signal output board 5. The lead wire 10 is arranged on the signal receiving board 9.

The rotating part 7 in the example is provided with twenty speed-sensing steel magnets B having a circular distribution, and the signal receiving board 9 with the switching Hall element 19, the switch Hall element 19 having its sensing face opposite to the surface of the speed-sensing steel magnet B.

The protective cover 20 in the example is fixed on the crank 3 through a screw for covering and protecting the deformed frame 4.

The working principle of the example is as follows:
When a person is riding a bike, the crank 3 will drive the chain wheel to rotate through the deformed frame 4. To be the same with the customary technology, the chain wheel 2 has to be provided with a chain to drive the bike, while the chain will achieve balance by exerting a reaction torque on the distortion frame 4 through the chain wheel 2. Because the chain wheel 2 and the crank 3 are fixed on the outer ring 4a and the inner ring 4b of the deformed frame 4, respectively, two opposite torques are exerted on the outer ring 4a and the inner ring 4b of the deformed frame 4, respectively, making the outer ring 4a and the inner ring 4b of the deformed frame 4 deformed and dislocated because of the torques, then making the position of the linear Hall element 6 change relative to that of the two torque-sensing steel magnets A. Because the two torque-sensing steel magnets A produce a near linear magnetic field distribution from the N pole to S pole in a small area on the sensing face of the linear Hall element 6, the output voltage of the linear Hall element 6 is affected by the change of the magnetic field through which the sensing face of the linear Hall element passes after the change of the position of the linear Hall element 6 relative to that of the two torque-sensing steel magnets A. The signal output board 5 has the function of converting the output voltage of the linear Hall element 6 into a corresponding variable load through the electronic circuit thereon.

When the rotating part 7 and the stationary part 8 in the example are coaxially assembled on the central shaft 1, the rotating magnetic tank 11 and the stationary magnetic tank 13 together form a closed loop, and form the isolation transformer together with the rotating coil 12 and the stationary coil 14 located inside; the stationary coil 14, equivalent to the primary coil of the isolation transformer, is electrically connected with the alternating-current generator arranged on the signal receiving board 9, and the rotating coil 12, equivalent to the secondary coil of the isolation transformer, is electrically connected with the signal output board 5. The alternating-current generator installed on the signal receiving board 9 supplies power to the stationary coil 14, i.e. supplying the alternating current to the primary coil of the isolation transformer; because the secondary coil (i.e. the rotating coil 12) of the isolation transformer is connected with the variable load, the current at the primary side may change with the variable load at the secondary side, thus completing detection of the torque by converting the change of the current into the voltage output through the signal receiving board 9.

In the specific operation of the example, because the rotating part 7 rotates with the chain wheel 2 and the deformed frame 4 while the stationary part 8 does not rotate due to the action of the stop rod 18 and the stop sheet 17, the lead wire 10 on the signal receiving board 9 fixed relative to the stationary part 8 can keep still and not be wound to the central shaft 1 to cause a loss like the usual case in the existing technology which results in decreased signal output stability.

Meanwhile, the present example can also detect the speed. When the electric bike is in operation, the rotating part 7 rotates with the chain wheel 2, while the switching Hall element 19 is stationary; thus, twenty speed-sensing steel magnets B having a circular distribution pass by the sensing face of the switching Hall element 19 continuously, making the switching Hall element 19 sense and output a corresponding speed pulse voltage signal that is finally outputted through the lead wire 10 after the corresponding signal processing by the signal receiving board 9.

## Claims

1. An electric-bike torque sensor comprising a central shaft (1), a chain wheel (2), and a crank (3) fixed on the central shaft (1), wherein the electric-bike torque sensor further comprises a deformed frame (4) including an outer ring (4a) and an inner ring (4b) connected with each other through a number of radial connecting bars (4c), the inner ring (4b) being secured to the crank (3), the outer ring (4a) being secured to the chain wheel (2); two torque-sensing steel magnets (A), their outer surfaces having the opposite polarity, **characterized in that**; they are fixed on the inner ring (4b), and a signal output board (5), on which is installed a linear Hall element (6), is fixed on the outer ring (4a), the sensing face of the linear Hall element (6) being opposite to the outer surface of the two steel magnets (A); the electric-bike torque sensor further comprises a rotating part (7), on which is fixed a secondary winding, and a stationary part (8) assembled coaxially on the central shaft (1), the rotating part (7) being fixed relative to one of the chain wheel (2), the deformed frame (4), the crank (3) and the central shaft (1); the stationary part (8), on which are fixed a primary winding and a signal receiving board (9), is kept from rotating relative to the rotating part (7), the primary and secondary windings together forming an isolation transformer, the primary winding being electrically connected with an alternating-current generator arranged on the signal receiving board (9) provided with a lead wire (10); and the secondary winding is electrically connected with the signal output board (5).

2. The electric-bike torque sensor according to claim 1, **characterized in that**: the secondary winding is composed of a circular rotating magnetic tank (11) fixed on the rotating part (7) and a rotating coil (12) arranged inside the rotating magnetic tank (11), and the primary winding is composed of a circular stationary magnetic tank (13) fixed on the stationary part (8) and a stationary coil (14) arranged inside the stationary magnetic tank (13); the rotating magnetic tank (11) and the stationary magnetic tank (13) together form a closed loop, and form the isolation transformer together with the rotating coil (11) and the stationary coil (14) located inside; the stationary coil (14), equivalent to a primary coil of the isolation transformer, is electrically connected with the alternating-current generator arranged on the signal receiving board (9), while the rotating coil (12), equivalent to a secondary coil of the isolation transformer, is electrically connected with the signal output board (5).

3. The electric-bike torque sensor according to claim 1 or 2, **characterized in that**: on the central shaft (1) is fixed a central-shaft bowl (15) rotatively arranged on a central-connector swivel (16) connected with an electric-bike frame, the central-connector swivel (16) being provided with a stop sheet (17) with a groove, the stationary part (8) being provided with a stop rod (18) protruding into against the groove.

4. The electric-bike torque sensor according to claim 1 or 2, **characterized in that**: the rotating part (7) is provided with some speed-sensing steel magnets (B) having a circular distribution, and the signal receiving board (9) with a switching Hall element (19), the switch Hall element (19) having its sensing face opposite to surface of the speed-sensing steel magnet (B).

5. The electric-bike torque sensor according to claim 1 or 2, **characterized in that**: a protective cover (20) is further fixed on the crank (3) for covering the deformed frame (4).

6. The electric-bike torque sensor according to claim 1 or 2, **characterized in that**: the stationary part (8) and the rotating part (7) are fixed axially through a buckle.

## Patentansprüche

1. Drehmomentsensor für ein Elektrofahrrad, aufweisend eine Zentralwelle (1), ein Kettenrad (2) und eine Tretkurbel (3), die auf der Zentralwelle (1) befestigt ist, wobei der Drehmomentsensor für ein Elektrofahrrad ferner einen verformten Rahmen (4), der einen äußeren Ring (4a) und einen inneren Ring (4b), die durch eine Anzahl strahlenförmiger Verbindungsstangen (4c) miteinander verbunden sind, aufweist, wobei der innere Ring (4b) an der Tretkurbel (3) befestigt ist, während der äußere Ring (4a) am Kettenrad (2) befestigt ist; zwei drehmomenterfassende Stahlmagneten (A), deren Außenflächen die entgegengesetzte Polarität aufweisen, **dadurch gekennzeichnet, dass** sie auf dem inneren Ring (4b) befestigt sind und eine Signalausgabeplatte (5), auf der ein lineares Hall-Element (6) angebracht ist, auf dem äußeren Ring (4a) befestigt ist, wobei die Erfassungsfläche des linearen Hall-Elements (6) der Außenfläche der zwei Stahlmagneten (A) gegenüberliegt; wobei der Drehmomentsensor für ein Elektrofahrrad ferner einen rotierenden Teil (7), auf dem eine Sekundärwicklung befestig ist, und einen ortsfesten Teil (8), der koaxial auf der Zentralwelle (1) montiert ist, aufweist, wobei der rotierende Teil (7) bezüglich eines des Kettenrads (2), des verformten Rahmens (4), der Tretkurbel (3) und der Zentralwelle (1) befestigt ist; wobei der ortsfeste Teil (8), auf dem eine Primärwindung und eine Signalempfangsplatte (9) befestigt sind, daran gehindert wird, bezüglich des rotierenden Teils (7) zu rotieren, wobei die Primär- und Sekundärwicklung zusammen einen Trenntransformator ausbilden, wobei die Primärwicklung mit einem Wechselstromgenerator elektrisch verbunden ist, der auf der Signalempfangsplatte (9), die mit einem Leitungsdraht (10) bereitgestellt wird, angeordnet ist; und wobei die Sekundärwicklung mit der Signalausgabeplatte (5) elektrisch verbunden ist.

2. Drehmomentsensor für ein Elektrofahrrad nach Anspruch 1, **dadurch gekennzeichnet, dass**: die Sekundärwicklung aus einem kreisförmigen rotierenden magnetischen Behälter (11), der auf dem rotierenden Teil (7) befestigt ist, und einer rotierenden Spule (12), die im rotierenden magnetischen Behälter (11) angeordnet ist, zusammengesetzt ist, und die Primärwicklung aus einem kreisförmigen ortsfesten magnetischen Behälter (13), der auf dem ortsfesten Teil (8) befestigt ist, und einer ortsfesten Spule (14), die im ortsfesten magnetischen Behälter (13) angeordnet ist, zusammengesetzt ist; wobei der rotierende magnetische Behälter (11) und der ortsfeste magnetische Behälter (13) zusammen einen geschlossenen Kreis ausbilden und zusammen mit der rotierenden Spule (11) und der ortsfesten Spule (14), die sich darin befinden, den Trenntransformator ausbilden; wobei die ortsfeste Spule (14), die einer Primärspule des Trenntransformators entspricht, mit dem auf der Signalempfangsplatte (9) angeordneten Wechselstromgenerator elektrisch verbunden ist, während die rotierende Spule (12), die einer Sekundärspule des Isolationstransformators entspricht, mit der Signalausgabeplatte (5) elektrisch verbunden ist.

3. Drehmomentsensor für ein Elektrofahrrad nach Anspruch 1 oder 2, **dadurch gekennzeichnet, dass**: auf der Zentralwelle (1) ein Zentralwellentopf (15) befestigt ist, der auf einem Zentralverbinder-Drehlager (16), das mit einem Elektrofahrradrahmen verbunden ist, drehbar angeordnet ist, wobei das Zentralverbinder-Drehlager (16) mit einer Anschlagplatte (17) mit einer Nut bereitgestellt wird, wobei der ortsfeste Teil (8) mit einer Anschlagstange (18), die gegen die Nut hineinragt, bereitgestellt wird.

4. Drehmomentsensor für ein Elektrofahrrad nach Anspruch 1 oder 2, **dadurch gekennzeichnet, dass**: der rotierende Teil (7) mit einigen geschwindigkeitserfassenden Stahlmagneten (B), die eine kreisförmige Verteilung aufweisen, und die Signalempfangsplatte (9) mit einem schaltenden Hall-Element (19) bereitgestellt wird, wobei das schaltende Hall-Element (19) seine Erfassungsfläche gegenüber der Oberfläche des geschwindigkeitserfassenden Stahlmagneten (B) aufweist.

5. Drehmomentsensor für ein Elektrofahrrad nach Anspruch 1 oder 2, **dadurch gekennzeichnet, dass**: eine Schutzabdeckung (20) ferner auf der Tretkurbel (3) befestigt ist, um den verformten Rahmen (4) zu bedecken.

6. Drehmomentsensor für ein Elektrofahrrad nach Anspruch 1 oder 2, **dadurch gekennzeichnet, dass**: der ortsfeste Teil (8) und der rotierende Teil (7) axial durch eine Schnalle befestigt sind.

## Revendications

1. Capteur de couple pour une bicyclette électrique, comprenant un arbre central (1), une roue à chaîne (2), et un pédalier (3) fixé sur l'arbre central (1), le capteur de couple pour une bicyclette électrique comprenant en outre un cadre déformé (4) comprenant un anneau externe (4a) et un anneau interne (4b) reliés l'un à l'autre par un nombre de barres de liaison (4c) radiales, l'anneau interne (4b) étant attaché au pédalier (3), l'anneau externe (4a) étant attaché à la roue de chaîne (2) ; deux aimants (A) en acier servant à détecter le couple dont les surfaces externes ont la polarité opposée, **caractérisé en ce qu'**ils sont fixés sur l'anneau interne (4b), et qu'une platine de sortie de signal (5) sur laquelle est montée un élément à effet Hall linéaire (6) est fixée sur l'anneau externe (4a), la face détectrice de l'élément à effet Hall linéaire (6) étant opposée à la surface externe des deux aimants (A) en acier ; le capteur de couple pour une bicyclette électrique comprenant en outre une partie rotative (7) sur laquelle est fixée un enroulement secondaire, et une partie fixe (8) montée de façon coaxiale sur l'arbre central (1), la partie rotative (7) étant fixée par rapport à l'un/une de la roue à chaîne (2), du cadre déformé (4), du pédalier (3) et de l'arbre central (1) ; la partie fixe (8) sur laquelle sont fixées un enroulement primaire et une platine de réception de signal (9) étant empêchée de tourner par rapport à la partie rotative (7), les enroulements primaire et secondaire formant ensemble un transformateur d'isolation, l'enroulement primaire étant relié électriquement à un générateur de courant alternatif disposé sur la platine de réception de signal (9) munie d'un fil conducteur (10) ; et l'enroulement secondaire étant relié électriquement à la platine de sortie de signal (5).

2. Capteur de couple pour une bicyclette électrique selon la revendication 1, **caractérisé en ce que** : l'enroulement secondaire est composé d'un réservoir magnétique circulaire rotatif (11) fixé sur la partie rotative (7) et une bobine rotative (12) disposée dans le réservoir magnétique rotatif (11), et l'enroulement primaire est composé d'un réservoir magnétique circulaire fixe (13) fixé sur la partie fixe (8) et une bobine fixe (14) disposée dans le réservoir magnétique fixe (13) ; le réservoir magnétique rotatif (11) et le réservoir magnétique fixe (13) formant ensemble une boucle fermée et formant le transformateur d'isolation conjointement avec la bobine rotative (11) et la bobine fixe (14) se trouvant à l'intérieur ; la bobine fixe (14) qui correspond à la bobine primaire du transformateur d'isolation est reliée électriquement au générateur de courant alternatif disposé sur la platine de réception de signal (9) alors que la bobine rotative (12) qui correspond à la bobine secondaire du transformateur d'isolation est reliée électriquement à la platine de sortie de signal (5).

3. Capteur de couple pour une bicyclette électrique selon la revendication 1 ou 2, **caractérisé en ce que** : un pot d'arbre central (15) disposé de manière rotative sur un palier pivotant de connecteur central (16) relié à un cadre de bicyclette électrique est fixé sur l'arbre central (1), le palier pivotant de connecteur central (16) étant muni d'une plaque de butée (17) ayant une rainure, la partie fixe (8) étant munie d'une tige de butée (18) faisant saillie à l'intérieur contre la rainure.

4. Capteur de couple pour une bicyclette électrique selon la revendication 1 ou 2, **caractérisé en ce que** : la partie rotative (7) est munie de quelques aimants (B) en acier servant à détecter la vitesse présentant une distribution circulaire et la platine de réception de signal (9) est munie d'un élément à effet Hall de commutation (19), la face détectrice de l'élément à effet Hall de commutation (19) étant opposée à la surface de l'aimant (B) en acier servant à détecter la vitesse.

5. Capteur de couple pour une bicyclette électrique selon la revendication 1 ou 2, **caractérisé en ce que** : un couvercle de protection (20) est fixé en outre sur le pédalier (3) pour couvrir le cadre déformé (4).

6. Capteur de couple pour une bicyclette électrique selon la revendication 1 ou 2, **caractérisé en ce que** : la partie fixe (8) et la partie rotative (9) sont fixées de façon axiale au moyen d'une boucle.
